# EUROPEAN PATENT APPLICATION

(11) **EP 4 678 931 A1**
(43) Date of publication of application: **14.01.2026**
(21) Application number: 25188950.7
(22) Date of filing: 11.07.2025
(51) Int. Cl.: F16D 13/44, F16F 15/129, F16F 15/30

(54) **TORQUE LIMITER**

(30) Priority: 11.07.2024 CN 202421650254 U
(71) Applicant: Nanjing Valeo Clutch Co., Ltd., Nanjing, Jiangsu 211153 (CN)
(72) Inventor: QIAN, Aijun, Nanjing, Jiangsu, 211153 (CN); HE, Yuxi, Nanjing, Jiangsu, 211153 (CN); WANG, Zaibo, Nanjing, Jiangsu, 211153 (CN); ZHANG, Nianlei, Nanjing, Jiangsu, 211153 (CN); ZHANG, Yun, Nanjing, Jiangsu, 211153 (CN); ZHEN, Chunyu, Nanjing, Jiangsu, 211153 (CN); YE, Ziyu, Nanjing, Jiangsu, 211153 (CN)
(74) Representative: Valeo Powertrain Systems

(57) **Abstract**

The present disclosure relates to a torque limiter, comprising: a cover plate adapted to be driven to rotate about a rotation axis and comprising an integrally formed bearing ring and multiple integrally formed tabs, the tab comprising a bearing tooth separated from the bearing ring by a distance in an axial direction; a pressure ring arranged between the bearing ring and the bearing tooth in the axial direction; a driven plate slidably sandwiched between the pressure ring and one of the bearing ring and the bearing tooth; an elastic member arranged between the pressure ring and the other of the bearing ring and the bearing tooth in the axial direction, and pressing the pressure ring towards the driven plate. The torque limiter further comprises an inertia increasing part arranged on the cover plate.

## Description

### TECHNICAL FIELD

The present disclosure relates to a torque limiter and a transmission assembly comprising the torque limiter. In particular, the torque limiter has an inertia increasing part, which is able to increase the rotational inertia of the torque limiter.

### Background

The torque produced by the engine of a motor vehicle is usually inconstant and fluctuates frequently. Such inconstant torque may be transmitted to the gearbox, causing the gearbox to vibrate and thus generating particularly undesirable noise or impacts, etc. The provision of a torque fluctuation absorbing mechanism in the drivetrain of a motor vehicle, to reduce the adverse effects of vibration and improve motor vehicle driving comfort, is already known. A torque fluctuation absorbing mechanism may allow fluctuations in the torque generated by a motor vehicle engine to be limited and absorbed. A torque fluctuation absorbing mechanism may comprise a flywheel, a torsional vibration damper and a torque limiter. The flywheel is fastened directly to the crankshaft of the engine; it has high rotational inertia, and is able to store and release torque, so that the torque output of the engine is smoother. The torque limiter is connected to the flywheel, and is able to limit torque fluctuation exceeding the maximum torque permitted by the torsional vibration damper. The torsional vibration damper is connected to the torque limiter, and typically absorbs and reduces fluctuations in torque by means of a spring structure.

The torque limiter generally comprises a torque limiter cover fixedly connected to the flywheel, and a driven plate connected to the torsional vibration damper. When torque fluctuation exceeds the maximum torque, the driven plate slides relative to the torque limiter cover, thereby limiting the transmitted torque. It is known that the torque limiter cover is composed of two cover plates riveted together in the axial direction, with the driven plate clamped between the two cover plates. Such a torque limiter cover with two cover plates has a large mass, and thus can also provide a certain, or predetermined, degree of rotational inertia, smoothing the engine torque output in cooperation with the flywheel. However, the torque limiter cover with two cover plates also increases the cost of parts, and thus the torque limiter becomes more expensive overall. In addition, in order to make the connection between the two cover plates tight and uniform, usually a large number of rivets, for example, 12 or more, are used for the riveting. The use of a large number of rivets will complicate the assembly process of the torque limiter; rivets may be lost, or cases of poor riveting quality may occur, and additional costs for controlling the riveting process are incurred.

Thus, there is an urgent need for a low-cost torque limiter with sufficiently high rotational inertia.

### SUMMARY OF THE INVENTION

Thus, the present disclosure is intended to solve the above-mentioned problems, an objective thereof being to provide a novel torque limiter which can be manufactured and assembled in a simple and cost-saving manner and has sufficiently high rotational inertia.

This objective is achieved through a torque limiter according to an embodiment of the present disclosure, the torque limiter comprising: a cover plate, the cover plate being adapted to be driven to rotate about a rotation axis, and the cover plate comprising an integrally formed bearing ring and multiple integrally formed tabs, the tab comprising a bearing tooth separated from the bearing ring by a distance in an axial direction; a pressure ring, the pressure ring being arranged between the bearing ring and the bearing tooth in the axial direction; a driven plate, slidably sandwiched between the pressure ring and one of the bearing ring and the bearing tooth; an elastic member, the elastic member being arranged between the pressure ring and the other of the bearing ring and the bearing tooth in the axial direction, and pressing the pressure ring towards the driven plate, wherein the torque limiter further comprises an inertia increasing part arranged on the cover plate.

An objective of the present disclosure is to provide a torque limiter which can be manufactured and assembled in a simple and cost-saving manner and has sufficiently high rotational inertia. The cover plate of the torque limiter according to the present disclosure comprises an integrally formed bearing ring and integrally formed bearing teeth; and the pressure ring, the elastic member and the driven plate are all held between the bearing ring and the bearing teeth. Thus, the cover plate according to the present disclosure is formed as a torque limiter cover in the form of a single component, thus simplifying the structure of the torque limiter and reducing the cost of components. **In** addition, since there is no need for assembly using rivets, etc., assembly of the torque limiter according to the present disclosure becomes simpler and more convenient, thus reducing the cost of manufacturing same. As the name implies, the inertia increasing part arranged on the cover plate can increase the rotational inertia of the cover plate, so that the one-piece cover plate has sufficient rotational inertia, compensating for the reduction in rotational inertial resulting from the omission of one cover plate.

A torque limiter according to the present disclosure may further have one or more of the following characteristics separately or in combination.

According to an optional embodiment of the present disclosure, the distance in an axial direction separating the bearing tooth from the bearing ring is a predetermined distance.

According to an optional embodiment of the present disclosure, the cover plate further comprises a flange located at a radially outer side of the bearing ring and the tab, and at least a portion of the inertia increasing part is located at a radially outer side of the flange. According to this characteristic, the inertia increasing part is arranged at a radially outer portion of the cover plate remote from the rotation axis, and this helps to increase the rotational inertia of the inertia increasing part.

According to an optional embodiment of the present disclosure, at least a portion of the inertia increasing part is located on the flange.

According to an optional embodiment of the present disclosure, the inertia increasing part comprises a bead formed by turning over a radially outer edge of the flange. With such an inertia increasing part, formed by a bead, being located at the radially outermost portion of the cover plate, the rotational inertia of the inertia increasing part is increased as much as possible.

According to an optional embodiment of the present disclosure, the bead is turned over from the flange towards the bearing ring.

According to an optional embodiment of the present disclosure, the bead extends beyond the bearing ring in the axial direction.

According to an optional embodiment of the present disclosure, the bead is turned over from the flange towards the bearing tooth.

According to an optional embodiment of the present disclosure, the bead extends in the axial direction to a position substantially level with the bearing tooth.

According to an optional embodiment of the present disclosure, the inertia increasing part comprises a diameter increasing part located at a radially outer side of the flange.

According to an optional embodiment of the present disclosure, the inertia increasing part comprises an inertia ring mounted on the flange.

According to an optional embodiment of the present disclosure, the cover plate further comprises multiple connecting parts, the connecting parts connecting the bearing ring to the flange, and the tab comprises a bent part connecting the bearing tooth to the flange.

According to an optional embodiment of the present disclosure, the bent part is located at a radially outer side of the pressure ring, the driven plate and the elastic member.

According to an optional embodiment of the present disclosure, each tab is arranged between two adjacent connecting parts in a circumferential direction, and the tab is separated from the connecting parts by a predetermined distance at both sides in the circumferential direction. That is to say, the circumferential size of the tab is smaller than the size of the gap between the two adjacent connecting parts. Preferably, a material of the tab and a material of the connecting part are not contiguous before the tab is formed, and are instead separated by the size of the gap mentioned above; this can facilitate formation of the tab.

According to an optional embodiment of the present disclosure, a length of extension of the tab from the flange to an extremity of the bearing tooth is less than a length of extension of the connecting part from the flange to the bearing ring. According to this technical feature, the material of the tab and a material of the bearing ring are not contiguous before the tab is formed, so as to facilitate formation of the tab.

According to an optional embodiment of the present disclosure, the tab comprises a weakening part arranged at a junction of the bent part and the bearing tooth. The weakening part reduces the difficulty of bending the tab to form the bearing tooth.

According to an optional embodiment of the present disclosure, the weakening part is a weakening groove.

According to an optional embodiment of the present disclosure, the flange comprises multiple bosses, the bosses protruding in a direction axially away from the bearing ring, and each tab being arranged on one boss. These bosses can increase the axial distance between the bearing ring and the junction of the tab and the flange. Thus, even if the axial length of the bent part of the tab is reduced, it can be ensured that there is sufficient axial distance between the bearing tooth and the bearing ring to accommodate the pressure ring, the driven plate and the elastic member. **In** addition, reducing the axial length of the bent part can also increase the radial length of the bearing tooth, ensuring that the bearing tooth is able to extend radially to a position radially opposite at least a portion of the bearing ring, so as to clamp the pressure ring, the driven plate and the elastic member.

According to an optional embodiment of the present disclosure, the pressure ring has multiple radially extending anti-rotation teeth, the anti-rotation teeth being insertable between two adjacent connecting parts. According to this technical solution, if relative sliding in the circumferential direction occurs between the pressure ring and the cover plate, the anti-rotation teeth can abut the connecting parts, preventing excessive sliding of the pressure ring. In other words, the anti-rotation teeth perform the function of restricting relative sliding between the pressure ring and the cover plate in the circumferential direction.

According to an optional embodiment of the present disclosure, each anti-rotation tooth consists of two half-teeth, each half-tooth respectively abutting one of two adjacent connecting parts. Thus, the anti-rotation teeth can eliminate relative sliding between the pressure ring and the cover plate as much as possible, without the half-teeth being too large in size.

According to an optional embodiment of the present disclosure, the cover plate has multiple anti-rotation slots, each said anti-rotation slot being formed in such a way as to be arranged between two adjacent connecting parts in a circumferential direction and between the bearing tooth and the bearing ring in the axial direction, and the anti-rotation teeth being insertable into corresponding anti-rotation slots. According to this technical solution, if relative sliding in the circumferential direction occurs between the pressure ring and the cover plate, the anti-rotation teeth can abut the anti-rotation slots, preventing excessive sliding of the pressure ring. In other words, the anti-rotation teeth and the anti-rotation slots perform the function of restricting relative sliding between the pressure ring and the cover plate in the circumferential direction.

According to an optional embodiment of the present disclosure, each anti-rotation tooth consists of two half-teeth, each half-tooth respectively abutting one of two adjacent connecting parts.

According to an optional embodiment of the present disclosure, the flange comprises multiple bosses, the bosses protruding in a direction axially away from the bearing ring, and each tab being arranged on one boss.

### Brief Description of the Drawings

The foregoing and other features and advantages of the present disclosure will become more apparent from the following detailed description of exemplary embodiments with reference to the accompanying drawings, and the description and the accompanying drawings are for illustrative purposes only and are not intended to limit the scope of the present disclosure in any way. The drawings below are not drawn to scale according to actual dimensions but rather focus on showing the main purpose of the present disclosure. In the figures:
Fig. 1 is a schematic drawing of a transmission assembly according to an embodiment of the present disclosure, the transmission assembly comprising a torque limiter.
Fig. 2 is an exploded view of the transmission assembly shown in Fig. 1.
Fig. 3 is a sectional view of the transmission assembly shown in Fig. 1.
Fig. 4 is a partial sectional view of the transmission assembly shown in Fig. 3, showing the torque limiter in detail.
Fig. 5 shows the cover plate of the torque limiter in the embodiment shown in Fig. 3.
Fig. 6 shows a cover plate of a torque limiter according to another embodiment of the present disclosure.
Fig. 7 shows a cover plate of a torque limiter according to another embodiment of the present disclosure.
Fig. 8 shows a pressure ring of a torque limiter according to an embodiment of the present disclosure.
Fig. 9 shows an elastic member of a torque limiter according to an embodiment of the present disclosure.

In the drawings, identical or similar components are indicated by identical reference numerals.

### Detailed Description of the Embodiments

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. "Comprise", "include" or any other similar term means that the element or object appearing before the term covers the elements or objects and equivalents thereof listed after the term but does not exclude other elements or objects. "Axial direction", "radial direction", "circumferential direction", and other directions are defined relative to a rotation axis X of the torque limiter, wherein the axial direction is the direction of extension of the rotation axis X, the radial direction is the direction perpendicular to the rotation axis X, and the circumferential direction is the direction of a circumference around the rotation axis X.

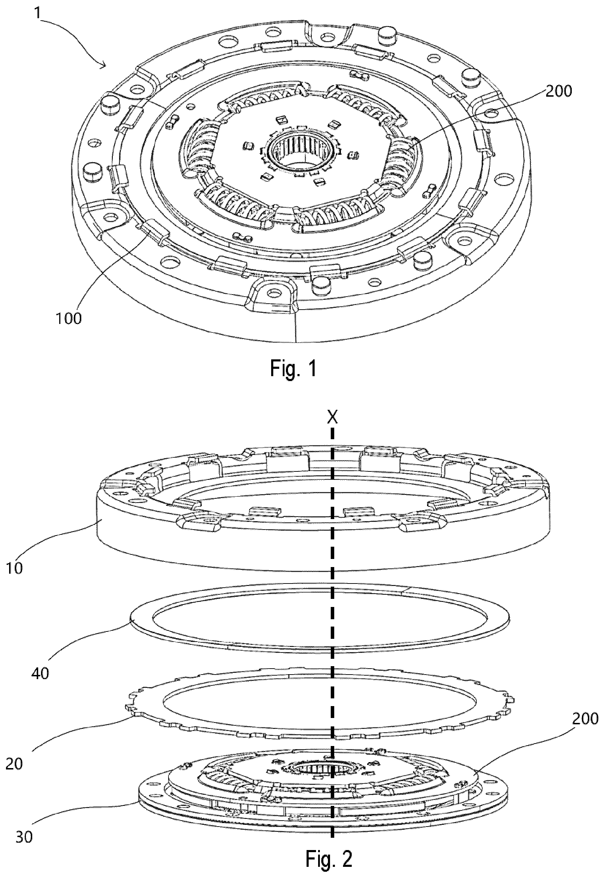

Fig. 1 is a schematic drawing of a transmission assembly 1 according to an embodiment of the present disclosure. Fig. 2 is an exploded view of the transmission assembly shown in Fig. 1.

The transmission assembly 1 may be used to transmit torque between an engine and a gearbox of a motor vehicle. The transmission assembly 1 may be divided into two parts: a torque limiter 100 and a torsional vibration damper 200. The torque limiter 100 is connected to a crankshaft of the vehicle engine and driven by the crankshaft, so as to transmit torque around the rotation axis X. The torsional vibration damper 200 is located inside the torque limiter 100 as a whole, and the torque transmitted by the torque limiter 100 is outputted by the torsional vibration damper to the gearbox of the motor vehicle. The torque limiter 100 has a predetermined maximum torque; even if the torque generated by the engine exceeds the maximum torque, the torque transmitted to the torsional vibration damper 200 will not exceed the maximum torque.

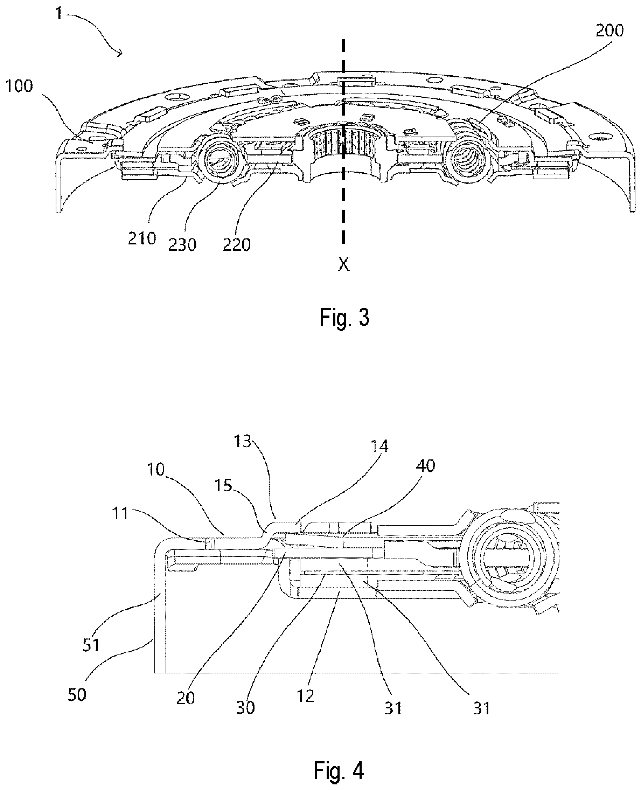

Referring to Figs. 1 and 3, the torsional vibration damper 200 has an input portion 210, an output portion 220, and four springs 230 arranged to be compressed between the input portion 210 and the output portion 220 in the circumferential direction. The input portion 210 is fixed to a driven plate 30 of the torque limiter 100, to receive the torque transmitted from the torque limiter 100. The spring 230 is a coil spring, of which one end is acted on by the input portion 210 and the other end acts on the output portion 220, so as to transmit torque from the input portion 210 to the output portion 220. The spring 230 can absorb and reduce fluctuations in torque by being compressed and extending.

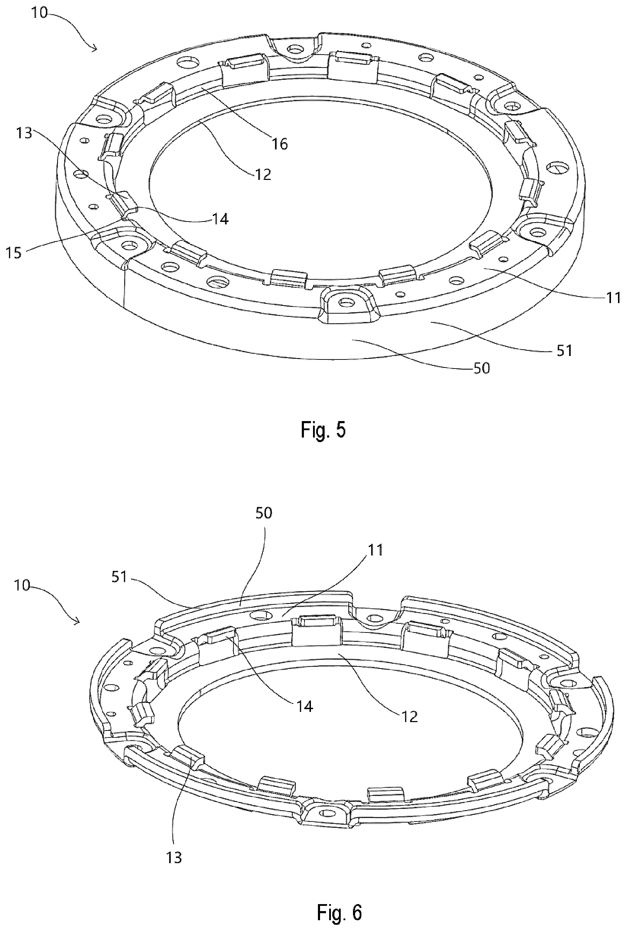

Continuing to refer to Figs. 1 and 3 in conjunction with Figs. 2 and 5, the torque limiter 100 comprises an integrally formed cover plate 10 adapted to be driven to rotate about the rotation axis X. Such a cover plate 10 may be formed by stamping or casting, etc. Specifically, the cover plate 10 comprises a flange 11, a bearing ring 12, multiple tabs 13, and multiple connecting parts 16 connecting the bearing ring 12 to the flange 11. In this embodiment, the flange 11 comprises multiple uniformly distributed through-holes on its outer periphery; these can be used to fix the cover plate 10 to a flywheel (not shown) by means of screws, etc. The bearing ring 12 and the tabs 13 are formed integrally with the flange 11, and thus rotate together about the rotation axis X. The tab 13 comprises a bearing tooth 14 and a bent part 15, the bent part 15 connecting the bearing tooth 14 to the flange 11. The bearing tooth 14 of the tab 13 is separated from the bearing ring 12 by a predetermined distance in the axial direction. Specifically, the bent part 15 and the connecting part 16 each have a certain, or predetermined, axial extension length, such that the bearing tooth 14 and the bearing ring 12 are respectively located at two sides of the flange 11 in the axial direction.

Referring to Fig. 4 in conjunction with Figs. 3 and 5, an inertia increasing part 50 is also provided on the cover plate 10, for increasing the rotational inertia of the integrally formed cover plate 10. The inertia increasing part 50 is a material increasing portion additionally arranged on the cover plate 10. In an exemplary embodiment shown in Fig. 4, the inertia increasing part 50 is arranged at a radially outermost edge of the cover plate 10. Specifically, the flange 11 is located at a radially outer side of the bearing ring 12 and the tabs 13, and the inertia increasing part 50 consists of a bead 51 formed by turning over a radially outer edge of the flange 11. In the embodiment shown in Fig. 4, the bead 51 is turned over from the flange 11 towards the bearing ring 12, and extends beyond the bearing ring 12 in the axial direction. The torque limiter 100 has a large dimension in the axial direction at the side where the bearing ring 12 is located, and is fitted to the flywheel (not shown) at this side. Thus, this side in the axial direction has a larger space, and the bead 51 can extend by a greater axial length, thus increasing the amount of rotational inertia that can be added by the inertia increasing part 50.

Referring to Fig. 5, in the circumferential direction, each tab 13 of the cover plate 10 is arranged between two adjacent connecting parts 16. Preferably, the tab 13 is separated from the connecting parts 16 by a predetermined distance at both sides in the circumferential direction. In addition, the length of extension of the tab 13 from the flange 11 to an extremity of the bearing tooth 14 is less than the length of extension of the connecting part 16 from the flange 11 to the bearing ring 12. That is to say, if the cover plate 10 were to be pressed flat, then the tab 13 would be connected to the remainder of the cover plate 10 by the bent part 15 alone; side edges and an extremity of the tab would be separated from the remainder of the cover plate 10. The tab 13 with such a structure can be formed by multiple stamping operations. For example, a U-shaped slot may first be stamped in the cover plate 10, and a portion enclosed by the U-shaped slot may then be stamped to form the tab 13. Compared to forming the tab in a single stamping operation, stamping the U-shaped slot first weakens the strength of connection between the portion enclosed by the U-shaped slot and the remainder of the cover plate 10, so the tab 13 can be formed by stamping more easily.

A pressure ring 20 is arranged between the bearing ring 12 and the bearing teeth 14 in the axial direction; the driven plate 30 is slidably clamped between the bearing ring 12 and the pressure ring 20 by means of an elastic member 40 arranged between the bearing teeth 14 and the pressure ring 20 in the axial direction. The elastic member 40 is supported by the bearing teeth 14 and presses the pressure ring 20, so that the driven plate 30 is pressed against the bearing ring 12. It can be envisaged that the driven plate 30 is slidably clamped between the bearing teeth 14 and the pressure ring 20 by means of the elastic member 40 arranged between the bearing ring 12 and the pressure ring 20 in the axial direction. The elastic member 40 is supported by the bearing ring 12 and presses the pressure ring 20, so that the driven plate 30 is pressed against the bearing teeth 14.

In a radial direction, the bent parts 15 of the tabs 13 are located at a radially outer side of the pressure ring 20, the driven plate 30 and the elastic member 40. That is to say, the points where the tabs 13 are connected to the flange 11 are located at a radially outer side of the pressure ring 20, the driven plate 30 and the elastic member 40. The bearing teeth 14 of the tabs 13 extend radially inwards, preferably to positions where they are at least partially axially opposite the bearing ring 12. In particular, a projection of the bearing teeth 14 in the axial direction partially overlaps the bearing ring 12; this helps to hold the pressure ring 20, the driven plate 30 and the elastic member 40 securely between the bearing ring 12 and the bearing teeth 14.

Referring to Fig. 4, a first axial distance of the bearing teeth 14 from the flange 11 is determined by the axial extension length of the bent parts 15, and a second axial distance of the bearing ring 12 from the flange 11 is determined by the axial extension length of the connecting part 16. The sum of the first and second axial distances is the axial distance between the bearing teeth 14 and the bearing ring 12. The pressure ring 20, the driven plate 30 and the elastic member 40 are all accommodated within this axial distance.

Fig. 6 shows an optional embodiment of the cover plate 10. In this embodiment, the inertia increasing part 50 of the cover plate 10 similarly consists of a bead 51 formed by turning over a radially outer edge of the flange 11. The difference is that the bead 51 is turned over from the flange 11 towards the bearing teeth 14. The dimension of the torque limiter 100 in the axial direction at the side where the bearing teeth 12 are located is small, and liable to be restricted by other components (e.g. the gearbox) of the vehicle drivetrain. Thus, there is little space for extension of the bead 51 at this side in the axial direction, and the bead 51 extends in the axial direction to a position substantially level with the bearing teeth 14.

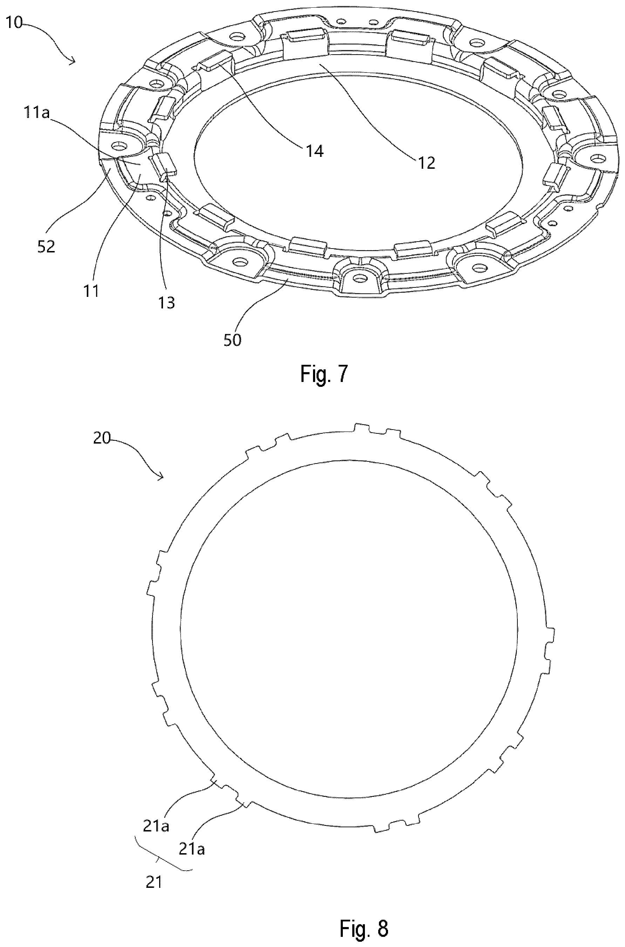

In some designs of the transmission assembly 1, the second axial distance between the bearing ring 12 and the flange 11 of the cover plate 10 is limited (as shown in Fig. 7). In this case, to accommodate the pressure ring 20, the driven plate 30 and the elastic member 40, it is necessary to increase the first axial distance of the bearing teeth 14 from the flange 11. However, in the case of a cover plate 10 formed by stamping, the total length of the tab 13 is limited. If the first axial distance is increased by increasing the axial extension length of the bent part 15, the radial extension length of the bearing tooth 14 must be shortened. This might result in the bearing teeth 14 being unable to extend to radial positions that are axially opposite the bearing ring 12, which is not favourable for holding the pressure ring 20, the driven plate 30 and the elastic member 40 between the bearing ring 12 and the bearing teeth 14.

For this reason, in the embodiment shown in Fig. 7, multiple bosses 11a are formed on the flange 11 of the cover plate 10. The bosses 11a protrude in a direction axially away from the bearing ring 12, and the tabs 13 are formed on the bosses 11a. The height to which the bosses 11a protrude compensates the axial distance between the bearing teeth 14 and the bearing ring 12, so there is no need to further increase the axial extension length of the bent parts 15, thus ensuring that the bearing teeth 14 are able to extend to radial positions that are axially opposite the bearing ring 12. In addition, in the embodiment shown in Fig. 7, the inertia increasing part 50 of the cover plate 10 consists of a diameter increasing part 52 located at a radially outer side of the flange 11. That is, the flange 11 has an additionally increased diameter, so as to increase the mass of the cover plate 10 and increase the rotational inertia of the cover plate 10.

In the embodiments of the inertia increasing part 50 described above, the inertia increasing part 50 in each case consists of an integral component part of the cover plate 10. It will be understood that the inertia increasing part 50 could also be a separate component, separate from the cover plate 10. For example, the inertia increasing part 50 may be formed of inertia mounted on the flange 11 of the cover plate 10.

Fig. 8 shows the pressure ring 20. The pressure ring 20 comprises multiple radially extending anti-rotation teeth 21. Referring to Figs. 3 and 4, in the assembled structure of the torque limiter 100, the anti-rotation teeth 21 are inserted between two adjacent connecting parts 16. That is, when assembling the torque limiter 100, the angle of the pressure ring 20 is oriented so that the anti-rotation teeth 21 are aligned with the gaps between two connecting parts 16. If relative sliding occurs between the pressure ring 20 and the cover plate 10, the anti-rotation teeth 21 will abut the connecting parts 16, preventing further sliding of the pressure ring 20. Specifically, the anti-rotation tooth 21 consists of two half-teeth 21a, each half-tooth 21a respectively abutting one of two adjacent connecting parts 16, so as to eliminate relative sliding as much as possible. Alternatively, it is also possible to set a width of the anti-rotation tooth 21 to be substantially equal to the gap between adjacent connecting parts 16. Therefore, the anti-rotation tooth 21 performs the function of positioning the pressure ring 20 in the circumferential direction.

In an optional embodiment not shown in the drawings, multiple anti-rotation slots may be provided on the cover plate 10, each anti-rotation slot being formed in such a way as to be arranged between two adjacent connecting parts 16 in the circumferential direction, and between the bearing tooth 14 and the bearing ring 12 in the axial direction. The anti-rotation teeth 21 of the pressure ring 20 can be inserted into corresponding anti-rotation slots, to realize angular positioning of the pressure ring 20 and the cover plate 10 relative to each other.

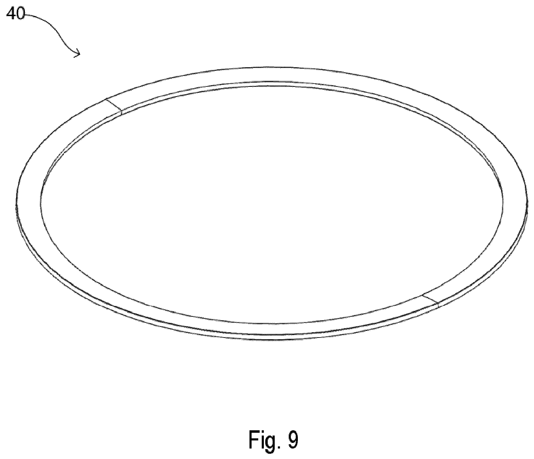

Fig. 9 shows the elastic member 40. The elastic member 40 has the form of a Belleville spring. Referring to Fig. 4, in the assembled structure of the torque limiter 100, the elastic member 40 respectively presses against the bearing teeth 14 and the pressure ring 20 at two sides in the axial direction. The elastic member 40 is compressed in the axial direction, thereby applying an elastic pressing force to the pressure ring 20. The size of the pressing force can be adjusted by changing parameters of the elastic member 40, so as to adjust the maximum torque that can be transmitted by the torque limiter 100.

With the structure described above, the cover plate 10, pressure ring 20 and elastic member 40 of the torque limiter 100 can be driven by the flywheel to rotate together, and together form an input side of the torque limiter 100. Torque output from the torque limiter 100 to the torsional vibration damper 200 is realized by means of the driven plate 30.

The torque limiter 100 as described above may be assembled in a simple manner. Firstly, the integrally formed cover plate 10 is provided, having the flange 11, bearing ring 12, tabs 13, and connecting parts 16 connecting the bearing ring 12 to the flange 11. In particular, at this time the structure of the tab 13 is such that it extends axially upwards from the flange 11 overall; the bent part 15 and the bearing tooth 14 are not formed. The driven plate 30, pressure ring 20 and elastic member 40 are then sequentially placed into the cover plate 10 in the axial direction, and supported by the bearing ring 12. The positions where the tabs 13 are connected to the flange 11 (i.e. the positions of the bent parts 15) can ensure that the driven plate 30, pressure ring 20 and elastic member 40 are properly positioned axially without obstruction from the tabs 13. In addition, when positioning the pressure ring 20, the angular position thereof is adjusted so that the anti-rotation teeth 21 are aligned with the gaps between two connecting parts 16. Finally, the tabs 13 are bent, to form the bent parts 15 and the bearing teeth 14, and hold the pressure ring 20, driven plate 30 and elastic member 40 between the bearing ring 12 and the bearing teeth 14 in the axial direction. In addition, the torsional vibration damper 200 may be mounted on the driven plate 30 first, and the driven plate 30 may then be fitted. Optionally, the torsional vibration damper 200 is installed after assembling the torque limiter 100. Thus, a step of riveting two cover plates of the torque limiter 100 can be omitted, while installation of the driven plate, pressure ring and elastic member is facilitated, thereby reducing the cost and time involved in assembling the torque limiter 100, and increasing the success rate of assembly.

Bending of the tabs 13 may be performed using a specially designed tool. A weakening part may also be provided on the tab 13 at the junction of the bent part 15 and the bearing tooth 14, to facilitate bending of the tab 13. As an example, the weakening part may have the form of a weakening groove. It will be understood that the weakening part could also have another form adapted to reduce the material strength at the junction of the bent part 15 and the bearing tooth 14. For example, the weakening part may be a weakening hole extending by a certain, or predetermined, length inside the tab 13 along the junction. When stamping the cover plate 10, a step of separately stamping or compressing such a weakening part may be provided.

Certain features, structures or characteristics in one or more embodiments of the present disclosure may be combined appropriately.

The above is a description of the present disclosure and should not be regarded as limiting it. Although several exemplary embodiments of the present disclosure have been described, those skilled in the art will easily understand that many modifications can be made to the exemplary embodiments without departing from the novel teaching and advantages of the present disclosure. Therefore, all such modifications are intended to be included in the scope of the present disclosure as defined by the claims. It should be understood that the above is a description of the present disclosure; the present disclosure should not be considered to be limited to the specific embodiments disclosed, and modifications to the disclosed embodiments and other embodiments are intended to be included within the scope of the present disclosure.

## Claims

1. A torque limiter (100), comprising:
a cover plate (10), adapted to be driven to rotate about a rotation axis (X), comprising an integrally formed bearing ring (12) and multiple integrally formed tabs (13), the tab (13) comprising a bearing tooth (14) separated from the bearing ring (12) by a distance in an axial direction;
a pressure ring (20), arranged between the bearing ring (12) and the bearing tooth (14) in the axial direction;
a driven plate (30), slidably sandwiched between the pressure ring (20) and one of the bearing ring (12) and the bearing tooth (14);
an elastic member (40), arranged between the pressure ring (20) and the other of the bearing ring (12) and the bearing tooth (14) in the axial direction, and pressing the pressure ring (20) towards the driven plate (30),
wherein the torque limiter (100) further comprises an inertia increasing part (50) arranged on the cover plate (10), the cover plate (10) further comprises a flange (11) located at a radially outer side of the bearing ring (12) and the tab (13), and at least a portion of the inertia increasing part (50) is located at a radially outer side of the flange (11) or located on the flange (11), and
wherein the inertia increasing part (50) comprises any one of the following: a bead (51) formed by turning over a radially outer edge of the flange (11), a diameter increasing part (52) located at a radially outer side of the flange (11), or an inertia ring mounted on the flange (11).

2. The torque limiter (100) according to claim 1, **characterized in that** the bead (51) is turned over from the flange (11) towards the bearing ring (12).

3. The torque limiter (100) according to claim 2, **characterized in that** the bead (51) extends beyond the bearing ring (12) in the axial direction.

4. The torque limiter (100) according to any one of claims 1 to 3, **characterized in that**
the bead (51) is turned over from the flange (11) towards the bearing tooth (14).

5. The torque limiter (100) according to claim 4, **characterized in that**
the bead (51) extends in the axial direction to a position substantially level with the bearing tooth (14).

6. The torque limiter (100) according to any one of claims 1 to 5, **characterized in that**
the cover plate (10) further comprises multiple connecting parts (16), the connecting parts (16) connecting the bearing ring (12) to the flange (11), and
the tab (13) comprises a bent part (15) connecting the bearing tooth (14) to the flange (11).

7. The torque limiter (100) according to claim 6, **characterized in that**
the bent part (15) is located at a radially outer side of the pressure ring (20), the driven plate (30) and the elastic member (40).

8. The torque limiter (100) according to claim 6 or 7, **characterized in that** each tab (13) is arranged between two adjacent connecting parts (16) in a circumferential direction, and the tab (13) is separated from the connecting parts (16) by a predetermined distance at both sides in the circumferential direction.

9. The torque limiter (100) according to any one of claims 6 to 8, **characterized in that**
a length of extension of the tab (13) from the flange (11) to an extremity of the bearing tooth (14) is less than a length of extension of the connecting part (16) from the flange (11) to the bearing ring (12).

10. The torque limiter (100) according to any one of claims 6 to 9, **characterized in that**
the tab (13) comprises a weakening part arranged at a junction of the bent part (15) and the bearing tooth (14).

11. The torque limiter (100) according to claim 10, **characterized in that** the weakening part is a weakening groove.

12. The torque limiter (100) according to any one of claims 6 to 11, **characterized in that**
the pressure ring (20) has multiple radially extending anti-rotation teeth (21), the anti-rotation teeth (21) being insertable between two adjacent connecting parts (16).

13. The torque limiter (100) according to claim 12, **characterized in that** each anti-rotation tooth (21) consists of two half-teeth (21a), each half-tooth (21a) respectively abutting one of two adjacent connecting parts (16).

14. The torque limiter (100) according to claim 12 or 13, **characterized in that** the cover plate (10) has multiple anti-rotation slots, each said anti-rotation slot being formed in such a way as to be arranged between two adjacent connecting parts (16) in a circumferential direction and between the bearing tooth (14) and the bearing ring (12) in the axial direction, and the anti-rotation teeth (21) being insertable into corresponding anti-rotation slots.

15. The torque limiter (100) according to any one of claims 1 to 14, **characterized in that**
the flange (11) comprises multiple bosses (11a), the bosses (11a) protruding in a direction axially away from the bearing ring (12), and each tab (13) being arranged on one boss (11a)
